# EUROPEAN PATENT APPLICATION

(11) **EP 4 438 651 A1**
(43) Date of publication of application: **02.10.2024**
(21) Application number: 22898951.3
(22) Date of filing: 18.11.2022
(51) Int. Cl.: C08G 63/60, C08G 63/78

(54) **METHOD FOR MANUFACTURING CHEMICALLY RECYCLED PET**

(30) Priority: 25.11.2021 KR 20210164913
(71) Applicant: LOTTE CHEMICAL CORPORATION, Seoul 05551 (KR)
(72) Inventor: JUNG, Hyun Jin, Daejeon 34110 (KR); HONG, Sungmin, Daejeon 34110 (KR); LEE, Su Hyun, Daejeon 34110 (KR); BOK, Changsuk, Daejeon 34110 (KR); PANG, Haejeong, Daejeon 34110 (KR); PARK, Jaeyun, Daejeon 34110 (KR)
(74) Representative: Germain Maureau
(86) International application number: PCT/KR2022/018257
(87) International publication number: WO 2023/096269

(57) **Abstract**

The present invention relates to a method for manufacturing chemically recycled PET, the method comprising the steps of: supplying a dicarboxylic acid compound and a diol compound to a mixing container to obtain a dicarboxylic acid-diol slurry; supplying a BHET powder to a melting drum to obtain molten BHET; supplying the dicarboxylic acid-diol slurry and the molten BHET to a polymerization reactor to induce an esterification reaction; recovering residual ethylene glycol from the top stream of the polymerization reactor; and supplying the residual ethylene glycol to the mixing container.

## Description

### [Technical Field]

The present invention relates to a method for manufacturing chemically recycled PET.

### [Background Art]

Consumption of plastic products is increasing every year. In particular, polyethylene terephthalate (PET) has been widely used as a raw material for bottle containers, films, fibers, etc., and among them, the consumption of bottle containers is increasing significantly. However, the need for recycling of plastic products such as PET, etc. has been continuously emphasized due to environmental problems, such as non-decomposing in the environment after use, and the like, and efforts to improve the recovery and recycling rates of waste PET products are continuing around the world.

A PET product recycling method may be divided into physical recycling and chemical recycling of waste PET. In the physical recycling, recycled PET is manufactured by washing, purifying, sorting, and pulverizing, and then refining and sorting waste PET products again to produce flakes from which impurities are removed, followed by an extrusion-filtration step, and the recycled PET manufactured as such is reused as a mixture with virgin PET, thereby producing new products such as bottles, fibers, and films. However, PET manufactured by such a mechanical recycling method is difficult to be applied to colored PET containing pigments, etc., and may not be used as food storage products such as beverages, etc., and thus in the case of including recycled PET, its use is limited.

Accordingly, research has recently been conducted on a chemical recycling method that depolymerizes waste PET to manufacture bis(2-hydroxyethyl)terephthalate (BEET) and polymerizes PET using the BHET as a raw material to manufacture recycled PET. As an example of the chemical recycling method of PET, Chinese Patent Publication No. 103132175 proposes a method of depolymerizing polyester waste using a metal catalyst.

There is a continuing demand for recycled PET using chemical recycling, but there are many difficulties in manufacturing recycled PET with physical properties equivalent to virgin PET by introducing BHET into a virgin PET manufacturing process, and thus there is a need for related research and development.

### [Disclosure]

### [Technical Problem]

An object of the present invention is to provide a method for manufacturing chemically recycled PET. Specifically, an object of the present invention is to provide a method capable of smoothly manufacturing chemically recycled PET by recycling ethylene glycol in an esterification reaction to secure the fluidity of a dicarboxylic acid-diol slurry when manufacturing the chemically recycled PET.

### [Technical Solution]

An embodiment of the present invention provides a method for manufacturing chemically recycled PET including: supplying a dicarboxylic acid compound and a diol compound to a mixing container to obtain a dicarboxylic acid-diol slurry;
supplying a BHET powder to a melting drum to obtain molten BHET;
supplying the dicarboxylic acid-diol slurry and the molten BHET to a polymerization reactor to induce an esterification reaction;
recovering residual ethylene glycol from the top stream of the polymerization reactor; and
supplying the residual ethylene glycol to the mixing container.

### [Advantageous Effects]

According to the embodiment of the present invention, the method for manufacturing chemically recycled PET has advantages of maximally using conventional PET manufacturing equipment, securing the fluidity of the dicarboxylic acid-diol slurry by recovering ethylene glycol and recycling the recovered ethylene glycol during the process, and enabling smooth polymerization of chemically recycled PET.

### [Best Mode of the Invention]

Throughout the specification, unless explicitly described to the contrary, when a certain part "comprises" a certain component, it will be understood to further include other components rather than excluding other components.

To manufacture chemically recycled PET (C-rPET), recycled bis(2-hydroxylethyl) terephthalate (BHET) obtained through depolymerization of PET is used, and it is economical to remodel a mass production line of a conventional virgin PET manufacturing plant. However, due to the addition of BHET containing an OH functional group, it is necessary to control the amount of raw material input in the virgin PET polymerization process. As an example, C-rPET is manufactured through an esterification reaction and a polycondensation reaction of the BHET with terephthalic acid (PTA) and ethylene glycol (EG), which are raw materials for PET polymerization. When the BHET is added to the conventional PET manufacturing process, a OH/COOH molar ratio in the raw material becomes unbalanced due to an OH functional group contained in the BHET. Therefore, in order to balance the OH/COOH molar ratio by adding the BHET, it is necessary to reduce the amount of ethylene glycol. However, when the amount of ethylene glycol is reduced, the viscosity of the dicarboxylic acid-diol slurry increases and thus there is a problem that it is difficult to be transferred to an esterification reactor.

In other words, the PET polymerization process may be performed sequentially through esterification (ES) and polycondensation (PC) processes, which correspond to a liquid polymerization process, and a solid-state polymerization (SSP) process, which corresponds to a solid-state polymerization process. By adding the BHET for manufacturing chemically recycled PET, the viscosity of the dicarboxylic acid-diol slurry supplied for the esterification reaction increases, and thus there is a problem that it is difficult to utilize conventional PET manufacturing equipment.

In order to solve the problem of reduced the fluidity of the dicarboxylic acid-diol slurry, the present inventors found that the problem may be solved by recovering ethylene glycol from a product of the esterification reaction and adding the recovered ethylene glycol to the dicarboxylic acid-diol slurry to secure the fluidity of the dicarboxylic acid-diol slurry.

Hereinafter, the present invention will be described in detail.

An embodiment of the present invention provides a method for manufacturing chemically recycled PET including: supplying a dicarboxylic acid compound and a diol compound to a mixing container to obtain a dicarboxylic acid-diol slurry;
supplying a BHET powder to a melting drum to obtain molten BHET;
supplying the dicarboxylic acid-diol slurry and the molten BHET to a polymerization reactor to induce an esterification reaction;
recovering residual ethylene glycol from the top stream of the polymerization reactor; and
supplying the residual ethylene glycol to the mixing container.

According to an embodiment of the present invention, the dicarboxylic acid compound may include at least one selected from the group consisting of aromatic dicarboxylic acid compounds having 8 to 20 carbon atoms and aliphatic dicarboxylic acid compounds having 4 to 12 carbon atoms. The aromatic dicarboxylic acid compound may be at least one selected from the group consisting of terephthalic acid, isophthalic acid, naphthalene dicarboxylic acid, and diphenyl dicarboxylic acid. In addition, the aliphatic dicarboxylic acid compound may be at least one selected from the group consisting of cyclohexanedicarboxylic acid, phthalic acid, sebacic acid, succinic acid, isodecylsuccinic acid, maleic acid, fumaric acid, adipic acid, glutaric acid, and azelaic acid. Specifically, the dicarboxylic acid compound may include at least one of terephthalic acid and isophthalic acid.

According to an embodiment of the present invention, the diol compound may include at least one selected from the group consisting of aromatic diol compounds having 8 to 40 carbon atoms and aliphatic diol compounds having 2 to 12 carbon atoms. The aromatic diol compound may include at least one selected from the group consisting of polyoxyethylene-(a)-2,2-bis(4-hydroxyphenyl)propane, polyoxypropylene-(b)-2,2-bis(4-hydroxyphenyl)propane, and polyoxypropylene-(c)-polyoxyethylene-(d)-2,2-bis(4-hydroxyphenyl)propane. Here, the (a), (b), (c), and (d) may refer to the numbers of polyoxyethylene or polyoxypropylene units. In addition, the aliphatic diol compound may include at least one selected from the group consisting of ethylene glycol, diethylene glycol, triethylene glycol, propanediol, butanediol, pentanediol, hexanediol, neopentyl glycol, cyclohexanediol, and cyclohexanedimethanol. Specifically, the diol compound may include at least one of ethylene glycol and diethylene glycol.

In the process for manufacturing the chemically recycled PET according to the present invention, since conventional PET manufacturing equipment are used, like the conventional PET manufacturing process, a dicarboxylic acid compound and ethylene glycol are mixed in a mixing container to obtain a dicarboxylic acid-diol slurry, and the dicarboxylic acid-diol slurry is supplied to a polymerization reactor.

According to one embodiment of the present invention, the BHET powder may be obtained through depolymerization of waste PET. Specifically, the BHET powder is a polymerization product containing BHET, and the content of BHET may be 25 mol% to 50 mol%. In the case of 100 mol% of BHET, since the esterification reaction is not required, it is not suitable for the process for manufacturing the chemically recycled PET in the present invention using the conventional PET manufacturing process, so that it is not preferable.

Since the process for manufacturing the chemically recycled PET according to the present invention utilizes conventional PET manufacturing equipment, the esterification (ES) reaction and the polycondensation (PS) reaction are sequentially performed as in the virgin PET manufacturing process. Since the esterification reaction and the polycondensation reaction are the liquid polymerization process, in order to maximally use the conventional PET manufacturing equipment, it is necessary to liquefy a solid BHET powder and supply the liquefied BHET to the polymerization reactor. Accordingly, in the present invention, a melting drum for melting the solid BHET powder is added to supply the liquid-phase molten BHET to the polymerization reactor.

According to an embodiment of the present invention, the melting drum may melt the BHET powder under a temperature range of 110°C to 130°C. Specifically, the melting drum may melt the BHET powder under a temperature range of 110°C to 125°C. Within the temperature range, the BHET powder may be supplied to the polymerization reactor in a molten state without side reactions.

According to an embodiment of the present invention, ethylene glycol may be recovered from a gas-phase reactant resulting from the esterification reaction in the polymerization reactor. Specifically, the top stream of the polymerization reactor may be transferred to a distiller to recover ethylene glycol. The residual ethylene glycol recovered in this way may be supplied to the mixing container. The residual ethylene glycol may lower the viscosity of the high-viscosity dicarboxylic acid-diol slurry to enable the flow into the polymerization reactor.

As described above, due to the addition of BHET, the amount of the diol compound, that is, ethylene glycol, in the mixing container for balancing the OH/COOH molar ratio is reduced, so that the viscosity of the dicarboxylic acid-diol slurry may be made difficult to flow smoothly in a transfer pipe within the conventional PET manufacturing equipment. The process for manufacturing the chemically recycled PET according to the present invention reduces the increased viscosity of the dicarboxylic acid-diol slurry to 20 poise or less even without adjusting the ratio of the dicarboxylic acid compound and diol compound to be added through recycling of the residual ethylene glycol into the mixing container so as to flow into the polymerization reactor.

According to an embodiment of the present invention, the esterification reaction in the polymerization reactor may be performed under a temperature range of 200°C to 260°C and a pressure range of 1 bar to 4 bar. That is, the esterification reaction in the process for manufacturing the chemically recycled PET according to the present invention may be adjusted to lower temperature range and higher pressure range conditions than the esterification reaction in the manufacturing process of conventional virgin PET, which is performed under a temperature range of 250°C to 300°C and a pressure range of 1 bar to 2 bar.

According to an embodiment of the present invention, the esterification reaction and the polycondensation reaction may be performed in the presence of a metal catalyst selected from the group consisting of titanium compounds, antimony compounds, germanium compounds, aluminum-based compounds, tin-based compounds, or mixtures thereof. The content of the catalyst may be 1 ppm to 500 ppm based on the central metal atom for the PET resin to be polymerized.

In addition, according to an embodiment of the present invention, a phosphorus-based stabilizer may be used in the esterification reaction and the polycondensation reaction. Specifically, in the esterification reaction and the polycondensation reaction, the phosphorus-based stabilizer selected from the group consisting of phosphoric acid, trimethyl phosphate, triethyl phosphate, triphenyl phosphate, triethyl phosphono acetate, or a mixture of two or more thereof may be added.

According to an embodiment of the present invention, the molar ratio of dicarboxylic acid and diol in the esterification reaction may be 1 : 1.05 to 1 : 3.0, specifically 1 : 1.05 to 1 : 1.3.

According to an embodiment of the present invention, the polycondensation reaction may be performed under a temperature range of 250°C to 330°C, specifically 270°C to 290°C. In addition, the polycondensation reaction may be performed under a pressure range of 0.1 torr to 5 torr, specifically 0.5 torr to 2 torr.

As described above, the process for manufacturing the chemically recycled PET according to the present invention utilizes the residual ethylene glycol, making it possible to manufacture chemically recycled PET using BHET by using conventional PET manufacturing equipment.

## Claims

1. A method for manufacturing chemically recycled PET comprising:
supplying a dicarboxylic acid compound and a diol compound to a mixing container to obtain a dicarboxylic acid-diol slurry;
supplying a BHET powder to a melting drum to obtain molten BHET;
supplying the dicarboxylic acid-diol slurry and the molten BHET to a polymerization reactor to induce an esterification reaction;
recovering residual ethylene glycol from the top stream of the polymerization reactor; and
supplying the residual ethylene glycol to the mixing container.

2. The method for manufacturing the chemically recycled PET of claim 1, wherein the melting drum melts the BHET powder under a temperature range of 110°C to 130°C.

3. The method for manufacturing the chemically recycled PET of claim 1, wherein the esterification reaction in the polymerization reactor is performed under a temperature range of 200°C to 260°C and a pressure range of 1 bar to 4 bar.
